# EUROPEAN PATENT APPLICATION

(11) **EP 3 088 849 A2**
(43) Date of publication of application: **02.11.2016**
(21) Application number: 16157905.7
(22) Date of filing: 29.02.2016
(51) Int. Cl.: G01D 5/245, C23C 24/04

(54) **MAGNETIC ENCODER ASSEMBLY**

(30) Priority: 27.04.2015 US 201514697253
(71) Applicant: United Technologies Corporation, Farmington, CT 06032 (US)
(72) Inventor: KLECKA, Michael A., Coventry, CT Connecticut 06238 (US); MANTESE, Joseph V., Ellington, CT Connecticut 06029 (US); SOLDNER, Nicholas Charles, Southbury, CT Connecticut 06488 (US); ZACCHIO, Joseph, Wethersfield, CT Connecticut 06109 (US); WU, Xin, Glastonbury, CT Connecticut 06033 (US); TOKGOZ, Cagatay, South Windsor, CT Connecticut 06074 (US)
(74) Representative: Hughes, Andrea Michelle

(57) **Abstract**

A sensor system includes a load-carrying element 102, an encoder structure 200, and a magnetic flux transducer 14. The load-carrying element is formed of substantially nonmagnetic material, while the encoder structure is formed of magnetic material deposited via cold spray additive manufacturing within the load-carrying element. The magnetic flux transducer is disposed adjacent the load-carrying element to sense changes in magnetic flux caused by relative motion of the encoder structure.

## Description

### STATEMENT OF GOVERNMENT INTEREST

The U.S. Government has a paid-up license in this invention and the right in limited circumstances to require the patent owner to license others on reasonable terms as provided for by the terms of Contract No. DE FE0012299 awarded by The Department of Energy.

### BACKGROUND

The present invention relates generally to sensor systems, and more particularly to magnetic encoder assemblies for magnetic sensor systems.

Turbine components such as shafts and blades are often fitted with encoders that enable local sensors to detect the position and/or motion of those components. Magnetic encoders, in particular, are installed via add-on parts such as rings or clips that are secured to components of interest. Such add-on encoders can contribute significantly to assembly weight, complexity, and cost, and can necessitate rebalancing of parts. Add-on encoders can also fail by becoming detached during operation.

### SUMMARY

In one aspect, the present invention is directed toward a method of forming an encoder assembly by forming a load-carrying element having desired mechanical properties, and depositing magnetic material within the load-carrying element via cold spray additive manufacturing. The mechanical properties of the load-carrying element remain unchanged, and the magnetic material is neither oxidized nor phase separated, by the deposition of the magnetic material.

In another aspect, the present invention is directed toward a sensor system that includes a load-carrying element, an encoder structure, and a magnetic flux transducer. The load-carrying element is formed of substantially non-magnetic material, while the encoder structure is formed of magnetic material deposited via cold spray additive manufacturing within the load-carrying element. The magnetic flux transducer is disposed adjacent the load-carrying element to sense changes in magnetic flux caused by relative motion of the encoder structure.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a perspective view of a first sensor system including a first encoder assembly and a first sensor.
FIG. 2 is a graph of magnetic flux density observed by the first sensor as a function of position with respect to the first encoder assembly.
FIG. 3 is a method flowchart describing a method of sensing position and movement using the first sensor system.
FIG. 4 is a perspective view of a second sensor system including a second encoder assembly and a second sensor.
FIG. 5 is a graph of magnetic flux density observed by the second sensor as a function of position with respect to the second encoder assembly.
FIG. 6 is a method flowchart describing a method of sensing position and movement using the second sensor system.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention. The figures may not be drawn to scale, and applications and embodiments of the present invention may include features and components not specifically shown in the drawings.

### DETAILED DESCRIPTION

The present invention produces a unitary encoder structure within a load-carrying element by embedding magnetic material within the load-carrying element at the time of manufacture, through cold spray additive manufacturing. Additive manufacturing techniques are sometimes used to manufacture a variety of turbine components. Several additive manufacturing techniques are commonly used, including electron beam melting (EBM), direct metal laser sintering (DMLS), selective laser sintering (SLS), direct metal deposition (DMD), and laser metal deposition (LMD). Many additive manufacture techniques, including EBM, DMLS, SLS, DLD, and LMD, cause dramatic heating of both pulverant material and substrates. This heating can alter the chemical composition of the resulting structure, causing oxidization and phase separation, and affecting mechanical characteristics (e.g., hardness, yield strength, elasticity, and temper). Cold spray additive manufacture allows magnetic material to be embedded in the load-carrying element without undesirable chemical changes to either the magnetic material, or the load-carrying element.

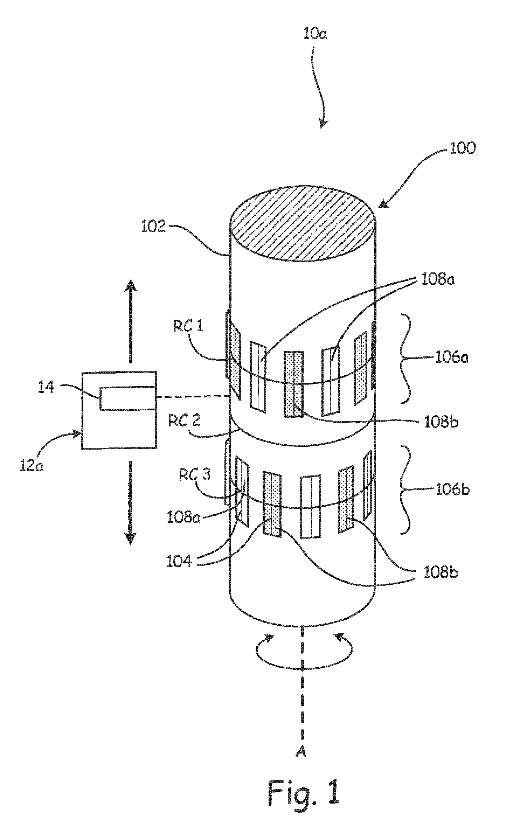

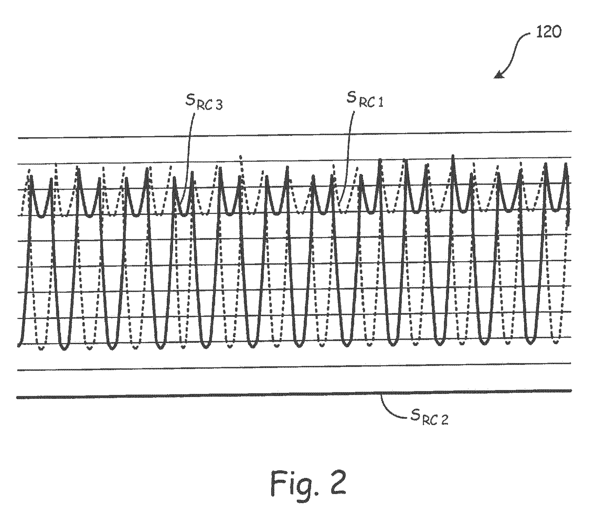

FIG. 1 is a perspective view of sensor system 10a, illustrating sensor 12a (with transducer 14) and encoder assembly 100 (with load-carrying element 102 and encoder elements 104). In the depicted embodiments, encoder elements 104 are arranged in first and second groups 106a and 106b, respectively. Groups 106a and 106b each include subsets 108a and 108b of encoder elements 104. FIG. 1 further illustrates axis A and references circles RC1, RC2, and RC3, which are referenced with respect to FIG. 2, discussed below.

Sensor system 10a is a magnetic flux-based sensor system disposed to detect position and/or speed of encoder assembly 100 relative to sensor 12a. Load-carrying element 102 of encoder assembly 100 can, for example, be a movable shaft or core element of a gas turbine engine, although persons skilled in the art will recognize that the present invention can additionally or alternatively be applied to other types of structural elements subject to movement. Load-carrying element 102 is formed of a substantially non-magnetic material such as non-magnetic steel, aluminum, titanium or titanium alloys, or a high-temperature-capable superalloy. Load-carrying element 102 has desired mechanical properties such as hardness, yield strength, elasticity, and temper selected for a particular application.

In the embodiment depicted in FIG. 1, a plurality of distinct encoder elements 104 are embedded within load-carrying element 102. Encoder elements 104 are formed of a magnetic material such as a magnetic alloy including steel, nickel, cobalt, and/or rare earth elements. In some embodiments, encoder elements 104 can be formed of a composite magnetic material (e.g., crushed magnetic AlNiCo powder) co-deposited with a non-magnetic binder phase. In the depicted embodiment, encoder elements 104 are each formed in a separate orifice, e.g., an axial groove or recess in an outer cylindrical surface of load-carrying element 102. Magnetic material is deposited to form encoder elements 104 by cold spray additive manufacturing, so as to avoid chemical changes to load-carrying element 102 and encoder elements 104 that can occur using hot manufacturing processes such as DMLS or EBM. In particular, cold spray fabrication avoids changes to the hardness, yield strength, elasticity, and/or temper of load-carrying element 102. Cold spray fabrication also prevents oxidization and/or phase separation of magnetic material forming load-carrying elements 102, thus obviating the need for a separate annealing process to obtain appropriate magnetic characteristics of load-carrying elements 102. Although encoder fabrication is described herein as a cold spray process, other additive manufacturing methods that preserve the chemistry of encoder elements 104 and load-carrying elements 102 can equivalently be substituted.

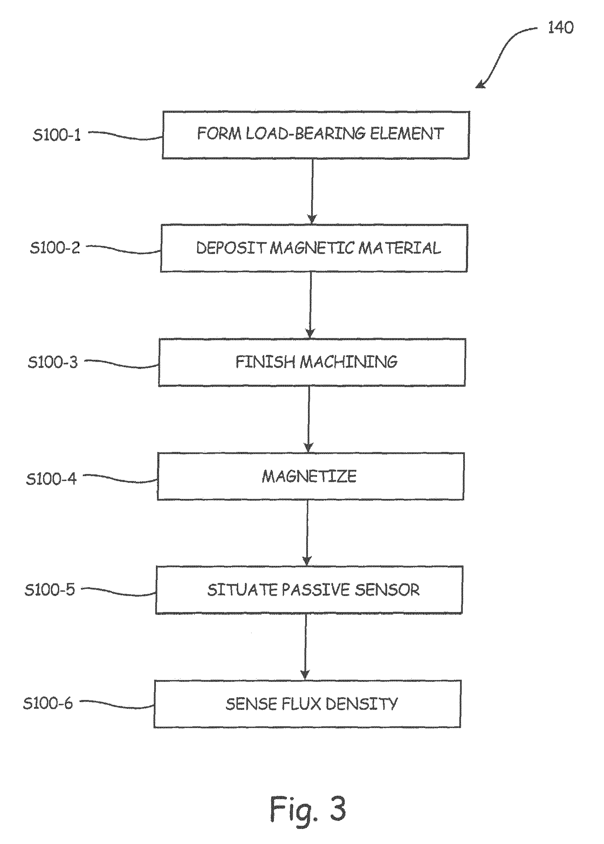

Each encoder element 104 is magnetized during manufacture, as described below with respect to FIG. 3. In the depicted embodiment, encoder elements 104 are subdivided into first and second groups 106a and 106b arranged in annular rows. More generally, encoder elements 104 can be arranged in any regular or known pattern to facilitate location and speed tracking using sensor 12a. As shown in FIG. 1, groups 106a and 106b each comprise encoder elements 104 from among a first and second subset 108a and 108b, respectively. In one embodiment, subsets 108a and 108b represent encoder elements 104 magnetized with opposite polarity, such that each encoder element 104 is adjacent only to encoder elements 104 of opposite polarity, within each group 106a and/or 106b. Alternative embodiments of encoder assembly 100 can include more than two groups 106a, 106b, and can include further subsets 108a, 108b representing further polarizations of encoder elements 104 (e.g., radially inward and/or outward). In the depicted embodiment, reference circle RC1 represents an axial location intersecting first group 106a, reference circle RC3 represents an axial location intersecting second group 106b, and reference circle RC2 represents an axial location between RC1 and RC3, intersecting neither group of encoder elements 104. Reference circles RC1, RC2, and RC3 are discussed in greater detail below with respect to FIG. 2.

Transducer 14 is a magnetic flux transducer such as a Hall Effect transducer. Transducer 14 can, for example, be situated within 1 cm (0.39 inches) of encoder assembly 100. During operation, sensor 12a monitors position and/or motion of encoder assembly 100 along and about axis A, derived from changes in magnetic flux due to movement of encoder elements 104 sensed by transducer 14. The inclusion of subsets 108a and 108b with different polarities provides larger flux variation as a function of encoder position, for a fixed geometry of encoder assembly 100. Thus, subsets 108a and 108b enable higher contrast, and therefore higher resolution position and speed sensing. The grouping of encoder elements 104 into first and second groups 106a and 106b, respectively, enables sensor 12a to track axial motion along axis A. In some embodiments, orientations, sizes, and/or polarizations of encoder elements can vary from group to group, to further facilitate position discrimination.

FIG. 2 depicts graph 120, an overlapping plot of magnetic flux densities sensed by sensor 10a, as a function of the position of sensor 10a relative to encoder assembly 100. FIG. 2 illustrates representative sensor readings, but does not necessarily precisely reflect actual values. FIG. 2 shows sensor signals S_{RC1}, S_{RC2}, and S_{RC3} corresponding to alignment of sensor 10a with reference circles RC1, RC2, and RC3, respectively, on encoder assembly 100. In particular, FIG. 2 illustrates magnetic flux as a function of angular position of sensor 12a with respect to axis A, at axial locations corresponding to RC1, RC2, and RC3. As illustrated in FIG. 2, the alternating polarities of subsets 108a and 108b produce sharp peaks and valleys in sensor signals S_{RC1} and S_{RC3}, enabling fine angular position resolution. The angular offset of subsets 108a and 108b in first group 106a relative to second group 106b allows axial position to be distinguished (i.e. RC1 vs RC3). In addition, magnetic flux magnitude drops continuously between locations of encoder elements 104, such that S_{RC2} is substantially zero in the illustrated embodiment. Overall signal amplitude can thus be used to determine axial distance from reference locations of reference circles RC1 and RC3. Using both amplitude and shape of transducer signals, sensor 12a can produce a position and/or speed readout reflecting the axial and angular position and/or speed of encoder assembly 100.

FIG. 3 illustrates method 140, a method of making and using sensor system 10a and encoder assembly 100. First, load-carrying element 102 is formed from substantially non-magnetic material, as described above with respect to FIG. 1. (Step S100-1). Load-carrying element 102 can, for example, be formed via additive manufacture, or by conventional casting and/or machining. Load-carrying element 102 has a plurality of orifices (e.g., grooves, pockets, or recesses) suited to receive encoder elements 104. Magnetic material is deposited within these orifices using cold spray additive manufacturing. (Step S100-2). Cold spray additive manufacturing is herein defined for the purposes of this application as additive manufacturing by deposition of solid powder via supersonic gas jets directed at target deposition locations. When pulverant impacts a target substrate, the resulting high-rate plastic deformation causes local heating and a strong bond, even between dissimilar materials. Cold spray additive manufacturing is additionally well-suited to producing dense, substantially nonporous structures. In one embodiment, encoder elements 104 are formed by depositing magnetic pulverant material via high pressure cold spray with a working gas at pressures in excess of 1.5 MPa. In at least some embodiments, the magnetic material of encoder element 104 can sufficiently dense and nonporous, and sufficiently strongly bonded to load-carrying element 102, to enable encoders elements 104 to share a significant portion of a structural load borne by encoder assembly 100; e.g., a torsion and/or axial load on a gas turbine engine shaft.

Once magnetic material has been deposited, the outer surface of encoder assembly 100 is machined to produce a smooth, cylindrical finish with no irregularities, ridges, or recesses. (Step S100-3). Encoder elements 104 are magnetized by applying a polarizing magnetic field to the deposited magnetic material. (Step S 100-4). As discussed above with respect to FIGs. 1 and 2, some embodiments of encoder assembly 100 can require that adjacent encoder elements 104 within each group 106a, 106b be magnetized with opposite or otherwise distinct polarities. Where high resolution is unnecessary, all encoder elements 104 can alternatively be magnetized with identical polarities.

After encoder assembly 100 is finished and magnetized, sensor 12a is situated in a sensing location adjacent and directed towards encoder assembly 100. (Step S100-5). In some embodiments, encoder assembly 100 can cover the entire extent of a structural element such as a shaft, drive-pin, or core, in which case one or more sensors 12a can productively be situated at any adjacent location. In other embodiments, only a limited region of a workpiece (e.g., a small axial extent covered by only two groups 106a and 106b) can be tagged with encoder elements 104. In this latter case, sensor 12a is situated close to at least one set of encoder elements 104. The optimal location of sensor 12a relative to encoder assembly 100 will depend on part dimensions, expected part movement, and desired resolution. In one embodiment, sensor 12a can be situated within 1 cm (0.39 inches) of encoder assembly 100.

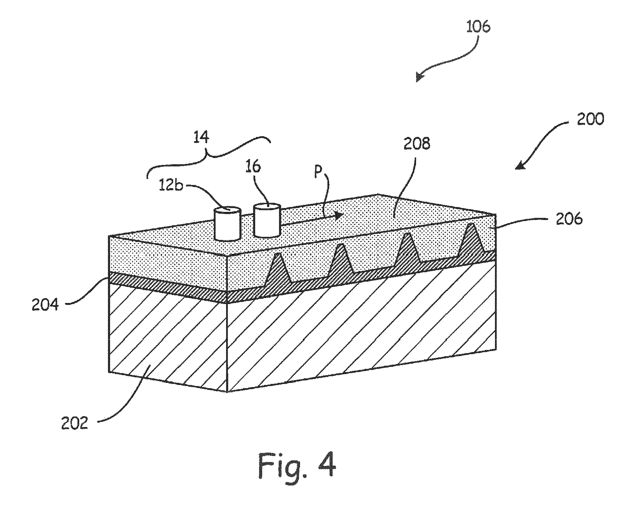

Sensor 12a senses flux density, and correlates changes in flux density with changes in part position, speed, and/or velocity. (Step S100-6). In the depicted embodiment, sensor 12a is a passive device that correlates changes in magnetic flux sensed by transducer 14 with changes to the position of encoder assembly 100, as discussed above with respect to FIG. 2. Alternative embodiments are discussed below with respect to FIGs. 4-6.

FIG. 4 is a perspective view of a sensor system 10b, an alternative embodiment of the present invention to sensor system 10a of FIG. 1. Sensor system 10b includes sensor 12b (with transducer 14 and magnet 16) and encoder assembly 200 (with load-carrying element 202, encoder element 204 having encoder pattern 206, and top coat 208). As described above with respect to sensor system 10a of FIG. 1, sensor system 10b is a magnetic flux-based sensor system disposed to detect position and/or speed of encoder assembly 200.

Load-carrying element 202 of encoder assembly 200 is depicted as a flat substrate, but can alternatively be a cylindrical or irregular element. Load-carrying element 202 is formed of a substantially non-magnetic material such as non-magnetic aluminum, steel alloy, or high-temperature-capable superalloy. Like load-carrying element 102, load-carrying element has desired mechanical properties such as hardness, yield strength, elasticity, and temper selected for a particular application.

Load-carrying element 202 serves as a substrate for encoder element 204, which is formed as a continuous unitary layer atop load-carrying element 202 via cold spray additive manufacturing. Encoder element 204 can, for example, be formed of a magnetic alloy including steel, nickel, cobalt, and/or rare earth elements. Encoder element 204 is formed with locally varying magnetic reluctance produced by encoder pattern 206. In the illustrated embodiment, encoder pattern 206 is a sawtooth pattern produced by natural pyramidal stack-up of magnetic pulverant at regular "peak" locations during cold spray fabrication of encoder element 204. More generally, encoder pattern 206 can be any pattern of thickness, density, or material concentration of encoder pattern 206 that produces variable magnetic reluctance as function of lateral position along encoder element 204. Like encoder elements 104 of encoder assembly 100, encoder element 204 of encoder assembly 200 is fabricated using cold spray to as to avoid chemical changes that hot fabrication techniques would produce. In particular, cold spray additive manufacturing allows encoder element 204 to be formed immediately atop load-carrying element 202 without impacting the hardness, yield strength, elasticity, or temper of load-carrying element 202, and without causing oxidization or phase separation within magnetic material of encoder element 204. In short, unlike hot additive manufacturing techniques (e.g., EBM, DMLS, LMD), cold spray additive manufacturing does not produce chemical changes with deleterious effects on mechanical properties of load-carrying element 202 and/or magnetic properties of encoder element 204. In the depicted embodiments, encoder element 204 is not permanently magnetized.

Top coat 208 is a structural layer fabricated atop encoder element 204, such that encoder element 204 is sandwiched between top coat 208 and load-carrying element 202. Some embodiments of encoder assembly 200 may omit top coat 208. Top coat 208 can, for example, be deposited via cold spray additive manufacturing, like encoder element 204. Top coat 208 is formed of a substantially non-magnetic material, and can in some embodiments be formed of the same material or materials as load-carrying element 202. Top coat 208 can, for example, protect encoder element 204 from corrosive environments or contact/wear surfaces. In the depicted embodiment, top coat 208 provides a smooth, flat finish to encoder assembly 200. More generally, top coat 208 can be contoured as desired for a particular application, e.g., to guide airflow or provide structural support.

Sensor 12a includes transducer 14 and magnet 16. Magnet 16 can, for example, be an AC electromagnet. Unlike sensor 12a of sensor system 10a, sensor 12b is an active device. During operation of sensor 12a, magnet 16 activates to produce a transient magnetic field that impinges on encoder assembly 200. Magnet 16 can, for example, be situated adjacent sensor 12b. In other embodiments, magnet 16 can be situated on an opposite side of encoder assembly 100 from transducer 14. In some embodiments, magnet 16 can be separately moveable relative to transducer 14, which can be either movable or stationary relative to encoder assembly 200. Transducer 14 detects changes in magnetic flux as magnet 16 moves relative to encoder element 204. In one embodiment, transducer 14 is situated at a fixed point relative to magnet 16, approximately 1.3 mm (0.05 inches) below a center location of magnet 16. Encoder pattern 206 ensures that movement along the surface of encoder assembly 200 creates differences in received magnetic flux at transducer 14, as flux lines from magnet 16 pass through regions of different magnetic reluctance within encoder element 204.

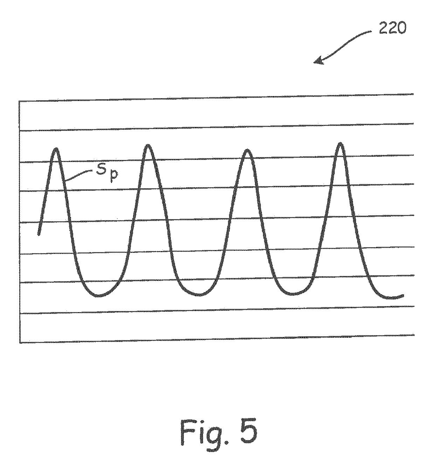

FIG. 5 shows graph 220, a plot of magnetic flux density distribution as a function of position in sensor system 10b. FIG. 5 depicts representative sensor readings, which need not precisely reflect actual values. FIG. 5 generally parallels FIG. 3, and illustrates variation in sensed magnetic flux as a function of position along encoder assembly 200. FIG. 5 illustrates sensor readings generally corresponding travel of magnet 16 and transducer 14 along path P with respect to encoder pattern 206 (see FIG. 4). Corresponding sensor signal is labeled Sₚ. As illustrated in FIG. 5, encoder pattern 206 produces sharp peaks and valleys in sensor signal S_{P} as a function of position along encoder assembly 200. Consequently, sensor 12b can detect motion and speed relative to encoder assembly 200. Although FIG. 4 only illustrates variations in encoder pattern 206 along path P, different variations in density, thickness, and material of encoder element 200 in directions transverse to path P could also be included, allowing sensor 12b to recognize relative motion of encoder assembly 200 in further dimensions.

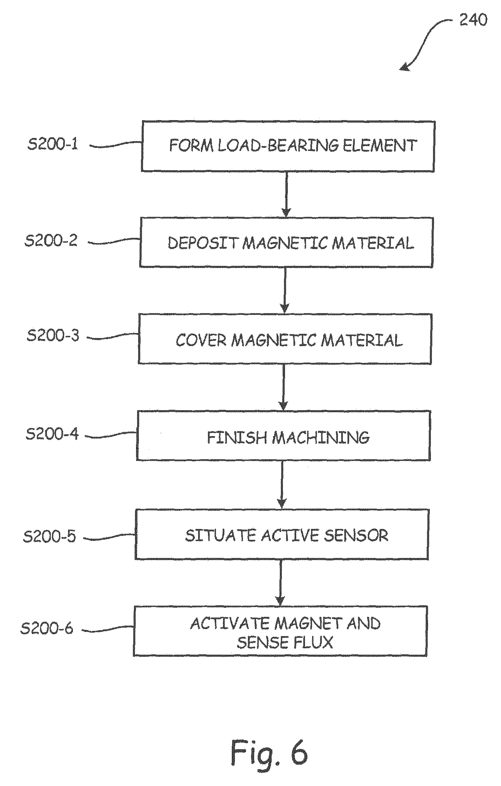

FIG. 6 illustrates method 240, a method of making and using sensor system 10b. Load-carrying element 202 is fabricated first. (Step S200-1). Next, magnetic material is deposited on load-carrying element 202 via cold spray additive manufacturing, forming encoder element 204. (Step S200-2). In the illustrated embodiment, magnetic material is first deposited in a continuous layer spanning the full extent of load-carrying element 202, then further deposited in local pyramidal formations to form crenellations and/or sawteeth extending away from load-carrying element 202. As noted above with respect to FIGs. 1, 3, and 4, cold spray fabrication avoids chemical changes to load-carrying element 202 and/or encoder element 204 that could negatively impact structural or magnetic properties of either. Once encoder element 204 is complete, further non-magnetic material is deposited on encoder element 204 to cover encoder element 204, forming top coat 208. (Step S200-3). Top coat 208 can likewise be formed via additive manufacturing to avoid undesirable chemical changes to top coat 208 and encoder element 204, and enable top coat 208 to be formed with high density and low porosity. Although top coat 208 is depicted as a flat layer that fills in recesses in encoder element 204 created by encoder pattern 206, alternative embodiments of top coat 208 can include more complex geometric or structural features formed additively atop encoder element 204. In at least some embodiments, top coat 208 is then machined to produce a smooth finish. (Step S200-4).

To sense position and movement of encoder assembly 200, both elements of sensor 12b-transducer 14 and magnet 16-are situated near encoder assembly 200. (Step S200-5). In one embodiment, magnet 16 is situated 0.5 cm (∼0.2 inches) or less from a top surface of top coat 208, and transducer 14 (or a pickup of transducer 14) is situated between magnet 16 and top coat 208. Magnet 16 is then activated, and transducer 14 detects variations in local magnetic flux caused by the position of magnet 16 and/or transducer 14 along encoder pattern 206 of encoder element 204. (Step S200-6) Like sensor 12a, sensor 12b senses flux density, and correlates changes in flux density with changes in part position, speed, and/or velocity.

FIGs. 1-3 and 4-6 present two embodiments of a sensor system wherein a load-carrying element is provided with embedded magnetic encoder elements via cold-spray additive manufacture. Cold-spray fabrication enables these encoder elements (104, 204) to be formed in-situ without compromising either structural qualities of the load-bearing elements (102, 202) or magnetic qualities of the resulting encoder elements. Embedded encoder elements allow magnetic flux-based sensors (e.g., Hall Effect sensors) to detect position and movement of load-carrying elements without need for additional encoder parts such as rings, clips, or other devices that would contribute to system weight, complexity, and cost.

### Discussion of Possible Embodiments

The following are non-exclusive descriptions of possible embodiments of the present invention.

A method of forming an encoder assembly, the method comprising: forming a load-carrying element having desired mechanical properties; and depositing magnetic material within the load-carrying element via cold spray additive manufacturing, such that the mechanical properties remain unchanged and the magnetic material is neither oxidized nor phase separated.

The method of the preceding paragraph can optionally include, additionally and/or alternatively, any one or more of the following features, configurations and/or additional components:
A further embodiment of the foregoing method, wherein depositing magnetic material within the load-carrying element comprises forming a plurality of discrete embedded magnetic structures within the load-carrying element.
A further embodiment of the foregoing method, further comprising applying a magnetic field to the deposited magnetic material to permanently magnetize the magnetic material.
A further embodiment of the foregoing method, wherein magnetizing the magnetic material comprises magnetizing each of the discrete embedded magnetic structures with alternating polarity.
A further embodiment of the foregoing method, wherein depositing magnetic material within the load-carrying element comprises forming a structure with regularly varying magnetic reluctance across at least one dimension of interest.
A further embodiment of the foregoing method, wherein the structure with regularly varying magnetic reluctance comprises a sawtooth pattern of embedded magnetic material.
A further embodiment of the foregoing method, further comprising depositing a substantially non-magnetic top coat on the structure with regularly varying magnetic reluctance, such that the structure with varying magnetic reluctance is sandwiched between the top coat and the load-carrying element.
A further embodiment of the foregoing method, wherein the magnetic material is an alloy comprising at least one of steel, nickel, cobalt, and rare earths.

A sensor system comprising: a load-carrying element formed of substantially non-magnetic material; an encoder structure formed of magnetic material deposited via cold spray additive manufacturing within the load-carrying element; a magnetic flux transducer disposed adjacent the load-carrying element to sense changes in magnetic flux caused by relative motion of the encoder structure.

The sensor system of the preceding paragraph can optionally include, additionally and/or alternatively, any one or more of the following features, configurations and/or additional components:
A further embodiment of the foregoing sensor system, wherein the encoder structure comprises a plurality of distinct encoder elements embedded in the load-carrying element
A further embodiment of the foregoing sensor system, wherein each of the distinct encoder elements is permanently magnetized.
A further embodiment of the foregoing sensor system, wherein each of the distinct encoder elements is magnetized with opposite polarity to adjacent encoder elements.
A further embodiment of the foregoing sensor system, wherein the encoder structure comprises a unitary encoder element with varying magnetic reluctance as a function of position within the load-carrying element.
A further embodiment of the foregoing sensor system, further comprising a magnet disposed with the magnetic flux transducer adjacent the load-carrying element to apply a transient magnetic field to the encoder structure.
A further embodiment of the foregoing sensor system, wherein the magnet is an AC electromagnet.
A further embodiment of the foregoing sensor system, further comprising a substantially non-magnetic top coat deposited between the encoder structure and the magnetic flux transducer.
A further embodiment of the foregoing sensor system, wherein the load-carrying element has hardness, yield strength, and elasticity that are not affected by the cold-spray deposition of the magnetic material.
A further embodiment of the foregoing sensor system, wherein the load-carrying element is a turbine shaft.

An encoder assembly comprising: a load-carrying element comprised of substantially non-magnetic material, and having a plurality of distinct orifices; a plurality of magnetic encoder elements, each formed via cold-spray additive manufacturing within one of the plurality of distinct orifices and magnetized in an alternating polarity pattern.

An encoder assembly comprising: a load-carrying element comprised of substantially non-magnetic material; a magnetic encoder structure deposited on the structural substrate, and having thickness that varies in a toothed pattern as a function of position along a contact surface between the structural substrate and the magnetic encoder structure; and a top coat comprised of substantially non-magnetic material and deposited on the magnetic encoder structure to form a flat outer surface parallel to the contact surface.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming an encoder assembly, the method comprising:
forming a load-carrying element (102) having desired mechanical properties; and
depositing magnetic material within the load-carrying element via cold spray additive manufacturing, such that the mechanical properties remain unchanged and the magnetic material is neither oxidized nor phase separated.

2. The method of claim 1, wherein depositing magnetic material within the load-carrying element comprises forming a plurality of discrete embedded magnetic structures (104) within the load-carrying element.

3. The method of claim 2, further comprising applying a magnetic field to the deposited magnetic material to permanently magnetize the magnetic material.

4. The method of claim 3, wherein magnetizing the magnetic material comprises magnetizing each of the discrete embedded magnetic structures with alternating polarity.

5. The method of claim 1, wherein depositing magnetic material within the load-carrying element comprises forming a structure with regularly varying magnetic reluctance across at least one dimension of interest.

6. The method of claim 5, wherein the structure with regularly varying magnetic reluctance comprises a sawtooth pattern of embedded magnetic material.

7. The method of claim 5, further comprising depositing a substantially non-magnetic top coat (208) on the structure with regularly varying magnetic reluctance, such that the structure with varying magnetic reluctance is sandwiched between the top coat and the load-carrying element.

8. The method of any preceding claim, wherein the magnetic material is an alloy comprising at least one of steel, nickel, cobalt, and rare earths.

9. A sensor system comprising:
a load-carrying element (102) formed of substantially non-magnetic material;
an encoder structure (200) formed of magnetic material deposited via cold spray additive manufacturing within the load-carrying element;
a magnetic flux transducer (14) disposed adjacent the load-carrying element to sense changes in magnetic flux caused by relative motion of the encoder structure.

10. The sensor system of claim 9, wherein the encoder structure comprises a plurality of distinct encoder elements (204) embedded in the load-carrying element, or wherein the encoder structure comprises a unitary encoder element with varying magnetic reluctance as a function of position within the load-carrying element.

11. The sensor system of claim 10, wherein each of the distinct encoder elements is permanently magnetized.

12. The sensor system of claim 11, wherein each of the distinct encoder elements is magnetized with opposite polarity to adjacent encoder elements.

13. The sensor system of any of claims 9 to 12, wherein the load-carrying element is a turbine shaft.

14. An encoder assembly comprising:
a load-carrying element comprised of substantially non-magnetic material, and having a plurality of distinct orifices;
a plurality of magnetic encoder elements, each formed via cold-spray additive manufacturing within one of the plurality of distinct orifices and magnetized in an alternating polarity pattern.

15. An encoder assembly comprising:
a load-carrying element comprised of substantially non-magnetic material;
a magnetic encoder structure deposited on the structural substrate, and having thickness that varies in a toothed pattern as a function of position along a contact surface between the structural substrate and the magnetic encoder structure; and
a top coat comprised of substantially non-magnetic material and deposited on the magnetic encoder structure to form a flat outer surface parallel to the contact surface.
